# EUROPEAN PATENT APPLICATION

(11) **EP 4 759 504 A1**
(43) Date of publication of application: **17.06.2026**
(21) Application number: 24219757.2
(22) Date of filing: 13.12.2024
(51) Int. Cl.: B29C 33/58

(54) **APPLICATION DEVICE FOR APPLYING A RELEASE AGENT TO A MOLD FOR CASTING A WIND TURBINE ROTOR BLADE**

(71) Applicant: Siemens Gamesa Renewable Energy A/S, 7330 Brande (DK)
(72) Inventor: Hasseriis, Simon Rokohl, 9000 Aalborg (DK); Andersen, Christian Buchhave, 9520 Skørping (DK)
(74) Representative: SGRE-Association

(57) **Abstract**

The present invention relates to an application device (1) for applying a release agent to an inner surface (2) of a mold (3) for casting a wind turbine rotor blade, comprising an application module (4) for applying the release agent to the inner surface (2) of the mold (3). The application device (1) comprises a transport module (5) for moving the application device (1) along the mold (3) and a positioning module (6) arranged at the transport module (5) for holding the application module (4) and for positioning the application module (4) relatively to the mold (3).

## Description

The present invention relates to an application device for applying a release agent to a mold for casting a wind turbine rotor blade for a motor vehicle.

The increasing global demand for wind power requires more and bigger wind turbines to be manufactured and commissioned in the coming years. One of the challenges is the wind turbine rotor blades, which keep growing especially in offshore applications. Therefore, there is a need for new molds and producing more wind turbine rotor blades within the blade factory molds. The downtime of each mold must be minimized so the production of wind turbine rotor blades can follow the demand from the supply chain.

After a casting of a wind turbine rotor blade in a mold and the removal of the finished wind turbine rotor blade from the mold, the mold needs to be prepared for the next casting process. This may involve that the mold is coated with a liquid release agent.

When water content is evaporated, the release agent forms a dry material layer on the inner surface of the mold that can enhance separation between the wind turbine rotor blade and the mold. This is to make sure the wind turbine rotor blade is properly released and not making any damage to the inner surface of the mold and thus delaying manufacturing of the next wind turbine rotor blade due to a need for maintenance of the mold.

Release agent is typically applied manually to the inner surface of the mold by means of a mop. This is a very time-consuming process, where the biggest molds for offshore wind turbine rotor blades can exceed 1000 square meters. For every single casting of an approximately 100-meter-long wind turbine rotor blade, it can take several workers for many hours applying release agent and repairing the surface of the mold.

Molds for casting wind turbine rotor blades comprise at least two mold parts, which can be moved together for closing the mold for the casting process. Moreover, the two mold parts can be moved apart for opening the mold. In the opened state of the mold, the casted wind turbine rotor blade can be demolded and the mold can be prepared for the successive casting process. Within the scope of the invention, each of these large mold parts is denoted "*mold*".

Therefore, the mold for casting a wind turbine rotor blade can comprise a lower mold and an upper mold. When utilizing integral blade casting, the wind turbine rotor blade is casted in one piece around a mandrel. The lower mold is stationary and the primary working point for glass fiber lay-up. At the very end of the material lay-up and mandrel placement process, the upper mold is placed and the casting can begin. For this reason, the moveable upper mold is utilized for more lower molds and thus being exposed to more castings. Hence, it is critical to have a well-prepared surface of the upper mold.

When the upper mold is not used for casting, it is usually placed in upright position to minimize space consumption within the factory hall. Usually, in the upright position, the spanwise direction of the mold is still parallel to the ground, wherein the chordwise direction of the mold is vertically oriented. Thus, it is difficult to prepare the mold with a release agent, since there is a need for working above shoulder height and very inconvenient working from platforms.

Furthermore, new release agent materials are being developed which are semi-permanent release agents. These materials can, if applied properly, last for several blade castings. In other words, it is important to have a proper and consistent application, hence, it is possible to obtain even better results and lower cycle time for wind turbine rotor blades manufacturing.

It is therefore the object of the present invention to eliminate or at least partially eliminate the disadvantages described above in the case of the preparation of a mold for a casting process for a wind turbine rotor blade. In particular, it is the object of the present invention to create an application device for applying a release agent to an inner surface of a mold for casting a wind turbine rotor blade, which provides for an even and less time-consuming application of release agent at the mold in a simple and inexpensive manner.

The above object is achieved by the claims. Accordingly, the problem is solved by an application device for applying a release agent to an inner surface of a mold for casting a wind turbine rotor blade with the features of the independent claim 1. Further features and details of the invention emerge from the subclaims, the description and the drawings.

According to the invention, the object is achieved by an application device for applying a release agent to an inner surface of a mold for casting a wind turbine rotor blade. The application device comprises an application module for applying the release agent to the inner surface of the mold. According to the invention, the application device comprises a transport module for moving the application device along the mold and a positioning module arranged at the transport module for holding the application module and for positioning the application module relatively to the mold.

For applying the release agent to the inner surface of the mold, the application device comprises the application module. Preferably, the application module is configured for providing the release agent to the inner surface of the mold and for evenly distributing the release agent over the inner surface of the mold. The release agent can be a standard release agent according to known casting processes for wind turbine rotor blades.

The transport module is configured for moving the application device along the mold. Preferably, the transport module comprises wheels, e.g., rubber wheels, rail wheels or the like, for securely moving the application device along the mold, especially on a floor, rails or the like. Preferably, the transport module is configured for moving the application device parallel to a spanwise direction of the mold.

The positioning module is arranged at the transport module, e.g., at a tower of the transport module, a portal of the transport module or the like. The positioning module is configured for holding the application module. Preferably, a first section of the positioning module is attached to the transport module and the application module is attached to a second section of the positioning module. Moreover, the positioning module is configured for positioning the application module relatively to the mold. For this purpose, it is preferred that the positioning module is configured to specifically change a relative position of the second section to the first section. Particularly preferred, the positioning module is configured for moving the application module in a chordwise direction of the mold.

Further preferred, the positioning module and the transport module are configured for cooperating in a coordinated way for moving the application module relative to the mold to provide an even application of the release agent to the inner surface. Further preferred, the application module is configured for cooperating in a coordinated way with the positioning module and/or the transport module. Thus, the even application of the release agent to the inner surface can be further improved.

An application device according to the invention has the advantage over conventional application devices that in a simple and inexpensive way, the process of applying the release agent to the inner surface of the mold can be performed automatically or at least semi-automatically by the application device. The precision of the application device is higher than the precision of normal workers, especially after several working hours due to fatigue, carelessness or the like. Due to a better precision, damages to the mold can be avoided better. Furthermore, the application speed of the application device can be much higher than the application speed of the workers. Beyond that, due to the hot molding process, the mold has a comparatively high temperature right after the demolding of the wind turbine rotor blade from the mold. For normal workers, the mold has to cool down in order to avoid hazardous vapors and burns for the workers. With the application device, the mold can be treated with the release agent shortly after the demolding process. By these means, the cycle time for the mold can be further reduced.

According to a preferred further development of the invention, an application device can provide that the application module comprises a spray nozzle. Preferably, the spray nozzle is configured for spraying the release agent directly to the inner surface of the mold. Alternatively, or additionally, it is preferred that the spray nozzle is configured for spraying the release agent onto an optional application body of the application module for applying the release agent, provided from the spray nozzle, to the inner surface of the mold. Preferably, the application device comprises a plurality of spray nozzles for providing the release agent to the inner surface of the mold directly and/or indirectly. This has the advantage that in a simple and inexpensive way, the reliable, fast and even application of the release agent to the inner surface of the mold is further improved.

It is preferred according to the invention that the application module comprises a wiping application tool. The wiping application tool is configured for evenly distributing the release agent, which is provided by the application module, e.g., a spray nozzle of the application module, over the inner surface of the mold. Preferably, the spray nozzle of the application module is arranged adjacent to the wiping application tool. Furthermore, it is preferred that the positioning module is configured for moving the wiping application tool over the inner surface of the mold with a constant mutual contact, contact pressure or the like. Preferably, the wiping application module is configured as an exchangeable wiping application module, e.g., with a quick exchange mechanism. This has the advantage that in a simple and inexpensive way, the reliable, fast and even application of the release agent to the inner surface of the mold is further improved.

More preferred, the wiping application tool comprises a mop and/or a sponge. A mop can be configured like a standard mop for applying release agent to an inner surface of a mold for casting wind turbine rotor blades. It is preferred that the mop comprises cotton, microfibers or the like. Preferably, the mop comprises a soft application side with an increased effective surface, due to a carpet like, card web like surface structure or the like. With the increased effective surface, the release agent can be absorbed and distributed better by the application tool. A sponge can be configured as a standard soft sponge, e.g., for polishing scratch sensitive surfaces. The sponge has a flexible sponge material and a plurality of pores, formed by the sponge material. Thus, the sponge is compressible. Moreover, due to the pores and the compressibility of the sponge, the release agent can be absorbed and distributed better by the application tool. This has the advantage that in a simple and inexpensive way, the reliable, fast and even application of the release agent to the inner surface of the mold is further improved.

In a particularly preferred embodiment of the invention, the wiping application tool is configured as a rotating tool, which is configured for rotation about a rotational axis. Preferably, the positioning module is configured for holding the application module in a way that the rotational axis is arranged horizontally, preferably parallel to the spanwise direction of the mold. It is preferred that the wiping application tool is configured for turning freely about the rotational axis, when being moved along the inner surface of the mold by the positioning module. Alternatively, or additionally, the application device comprises a motor, e.g., an electromotor or a pneumatic motor, for rotating the wiping application tool about the rotational axis. Preferably, the motor is arranged right aside or inside the wiping application tool. Alternatively, the motor can be arranged at the positioning module. This has the advantage that in a simple and inexpensive way, the reliable, fast and even application of the release agent to the inner surface of the mold is further improved.

Preferably, the positioning module is configured for turning the rotational axis of the wiping application tool about a turning axis. In other words, the positioning module can be configured such that the orientation of the rotational axis can be changed to different orientations. Preferably, the turning axis is a horizontal axis. Further preferred, the turning axis is perpendicular to the rotational axis. Thus, the wiping application tool can easily keep contact to the inner surface of the mold, even when the orientation of the rotational axis is changed. Such manipulation of the rotational axis can be advantageous when the inner surface of the mold shows any irregularities, which have to be specially treated compared to normal sections of the inner surface of the mold. The wiping application tool can be configured for rotating in a certain direction, e.g., clockwise. According to another embodiment, the wiping application tool can be rotating in one direction when moving upwards and changing rotation direction when moving downwards. Alternatively, the wiping application tool can be configured for oscillation rotation, e.g., about 45 degrees, 30 degrees or less. This has the advantage that in a simple and inexpensive way, the reliable, fast and even application of the release agent to the inner surface of the mold is further improved.

According to a preferred embodiment of the invention, the application device comprises a distance sensing module for determining a distance between the inner surface of the mold and the application device. Preferably, the distance sensing module is arranged at the positioning module, e.g., adjacent to the application module. With the determination of the distance between the inner surface of the mold and the application device, the parameters for operating the application device for applying the release agent to the inner surface of the mold can be controlled better with respect to the result of the application process. By these means, e.g., a thickness of the applied release agent can be controlled better. This has the advantage that in a simple and inexpensive way, the reliable, fast and even application of the release agent to the inner surface of the mold is further improved.

Particularly preferred the distance sensing module comprises an optical distance measurement device and/or a contact distance measurement device and/or an acoustic distance measurement device. An optical distance measurement device can comprise a laser, a camera or the like. A contact distance measurement device can comprise a measuring rod, a pressure cylinder, a pressure spring or the like. An acoustic distance measurement device can comprise an ultrasonic sensor or the like. This has the advantage that in a simple and inexpensive way, the reliable, fast and even application of the release agent to the inner surface of the mold is further improved.

It is preferred according to the invention that the application device comprises a pressure sensing module for sensing a mutual pressure of the application module and the inner surface of the mold. The pressure sensing module can comprise a pressure spring, a piezo element, a pressure cylinder or the like. This is preferred in combination with an application module, which has a mop and/or a sponge for applying the release agent to the inner surface of the mold. By controlling the pressure between the application module and the inner surface of the mold, the distribution and the layer thickness of the release agent on the inner surface of the mold can be controlled better. This has the advantage that in a simple and inexpensive way, the reliable, fast and even application of the release agent to the inner surface of the mold is further improved.

Preferably, the positioning module is configured for moving the application module in a vertical direction and/or in a horizontal direction. For the mold, the vertical direction can be the chordwise direction of the mold. The horizontal direction can be a direction of the mold, which is perpendicular to the spanwise direction and the chordwise direction of the mold. Thus, it is preferred that the positioning module is configured for moving the application module in the spanwise direction of the mold and, thereby, ensuring a determined, preferably constant, distance between the application module and the inner surface of the mold. In other words, by these means, the application module can follow the concave shape of the inner surface of the mold. Thus, a constant contact of the application module with the mold and /or a constant distance between the application module and the mold can be ensured. Preferably, the positioning module is configured for performing this movement action in a periodic or recurrent way to ensure a consistent distribution of the release agent. This has the advantage that in a simple and inexpensive way, the reliable, fast and even application of the release agent to the inner surface of the mold is further improved.

According to a preferred embodiment of the invention, the application device comprises a fluid tank for holding the release agent. Preferably, the fluid tank is arranged at the transport module. Further preferred, for providing the release agent to the application module, the fluid tank is coupled to the application module by a fluid hose. Preferably, for forwarding the release agent to the application module, the application device comprises a fluid pump. Further preferred, the fluid pump is arranged at or adjacent to the fluid tank. This has the advantage that in a simple and inexpensive way, the reliable, fast and even application of the release agent to the inner surface of the mold is further improved. Moreover, by these means, a degree of autonomy of the application device is increased.

Particularly preferred, the transport module comprises a suction module for enabling the application device driving in a vertical direction on the inner surface of the mold. Thus, the application device can drive on the inner surface of the mold and apply the release agent to the inner surface of the mold. This has the advantage that in a simple and inexpensive way, the reliable, fast and even application of the release agent to the inner surface of the mold is further improved. Moreover, since the application device can be driven on the inner surface of the mold directly, there is less space required at the production site for the application device and, therefore, a plurality of molds can be arranged closer to each other for the application process of the release agent.

It is preferred according to the invention that the application device comprises a power pack for providing electric energy for operating the application device. Preferably, the power pack comprises a Li-Ion battery. With a power pack, the application device can be operated without an external power supply via extra power cables. In case of a power breakdown, the application device still can be operated. This has the advantage that in a simple and inexpensive way, the reliable, fast and even application of the release agent to the inner surface of the mold is further improved. Moreover, by these means, a degree of autonomy of the application device is increased.

According to a preferred embodiment of the invention, the application device comprises a control module for automatically operating the application device. Preferably, the control module is configured for operating the modules of the application device, e.g., for synchronizing actions of the transport module with the positioning module and the application module. Thus, the application of the release agent to the inner wall of the mold can be supervised and further optimized by the control module. Furthermore, with the control module, the application device can be operated automatically or at least semi-automatically. This has the advantage that in a simple and inexpensive way, the reliable, fast and even application of the release agent to the inner surface of the mold is further improved. Moreover, by these means, a degree of autonomy of the application device is increased.

Preferably, the application device comprises a user interface for manually operating the application device. The user interface can comprise a wireless interface, a Bluetooth interface, a terminal interface, e.g., with a touchscreen, a joystick, steering buttons, or the like. The user interface can be configured for receiving users' instructions for automatically operating the application device, e.g., for starting or ending an application process at the mold. This can also include an emergency stop function. The user interface can also be configured for receiving users steering commands for directly operating the application device, e.g., for transmitting a speed and/or direction of the transport module, for moving the application module with the positioning module or the like. Thus, by the user interface, the user can control the application device. This has the advantage that in a simple and inexpensive way, the reliable, fast and even application of the release agent to the inner surface of the mold is further improved. Moreover, by these means, a controllability of the application device is increased.

Further advantages, features and details of the invention unfold from the following description, in which by reference to drawings working examples of the present invention are described in detail. Thereby, the features from the claims as well as the features mentioned in the description can be essential for the invention as taken alone or in an arbitrary combination. In the drawings:
Figure 1 shows a schematic side view of an application device according to a preferred first embodiment of the invention,
Figure 2 shows a schematic side view of an application device according to a preferred second embodiment of the invention,
Figure 3 shows a schematic side view of an application device according to a preferred third embodiment of the invention,
Figure 4 shows a schematic side view of an application device according to a preferred fourth embodiment of the invention,
Figure 5 shows a schematic side view of an application device according to a preferred fifth embodiment of the invention, and
Figure 6 shows a schematic front view of a preferred embodiment of an application module for an application device according to the invention.

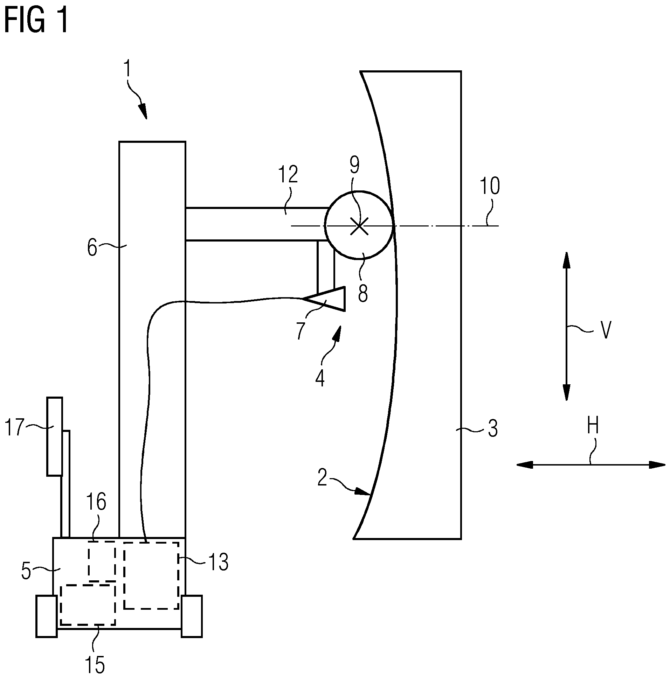

Elements with the same function and effectiveness are denoted each in figures 1 to 6 with the same reference numbers.

In fig. 1, an application device 1 according to the preferred first embodiment of the invention is shown in a schematic side view. The application device 1 comprises a transport module 5 and a positioning module 6, mounted on the transport module 5. At an end section of the positioning module 6, an application module 4 is mounted. The application module 4 is configured for applying release agent to an inner surface 2 of a mold 3. The positioning module 6 is configured for moving the application module 4 in a horizontal direction H and in a vertical direction V. Thus, the application module 4 can follow the inner surface 2 of the mold 3 in a chordwise direction of the mold 3. With the transport module 5, the application device 1 can be moved in a spanwise direction of the mold 3.

According to the preferred first embodiment of the invention, the application module 4 comprises a spray nozzle 7 for spraying the release agent on the inner surface 2 of the mold 3. The application module 4 further comprises a wiping application tool 8, which is rotatable about a rotational axis 9. The wiping application tool 8 can be configured as a mop, sponge or the like. For controlling the pressure force between the wiping application tool 8 and the inner surface 2 of the mold 3, the application device 1 comprises a pressure sensing module 12, arranged at the positioning module 6. Moreover, the positioning module 6 is configured for turning the wiping application tool 8 about a turning axis 10.

The application device 1 also comprises a fluid tank 13 for storing the release agent. The fluid tank 13 is arranged inside the transport module 5. Furthermore, the application device 1 comprises a power pack 15 for providing electrical power to the application device 1, a control module 16 for operating the application device 1 and a user interface 17 for allowing a user to manually operate the application device 1. This preferred embodiment of the invention is preferred for application to a mold 3 in an "upright" position.

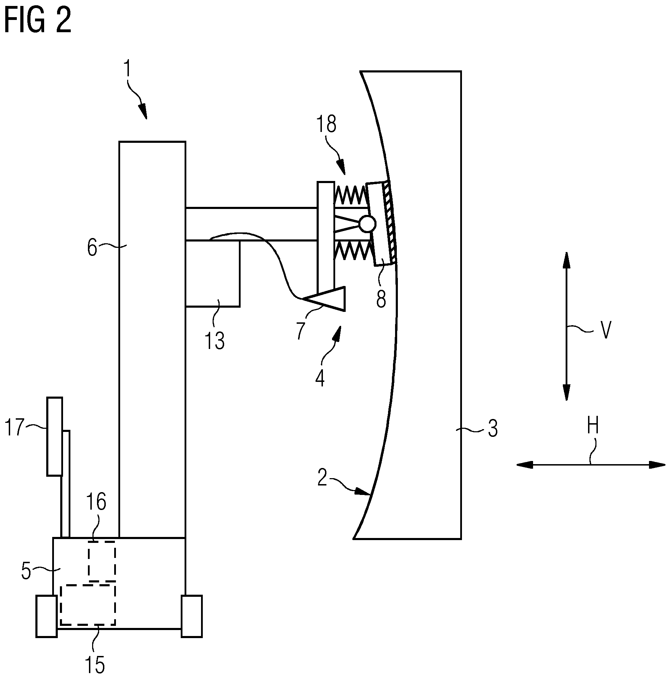

In fig. 2, an application device 1 according to the preferred second embodiment of the invention is shown in a schematic side view. The application device 1 according to the second embodiment differs from the first embodiment in the design of the application module 4 and the location of the fluid tank 13. According to the preferred second embodiment of the invention, the application module 4 comprises a plate-shaped wiping application tool 8, pivotably arranged at the positioning module 6 by a linear guide module 18. Thus, the wiping application tool 8 can follow the curvature of the inner surface 2 of the mold 3 better. The wiping application tool 8 can be configured as a mop, sponge or the like. The fluid tank 13 is arranged at the positioning module 6. For spraying the release agent to the inner surface 2 of the mold 3, the application module 4 comprises a spray nozzle 7. This preferred embodiment of the invention is preferred for application to a mold 3 in an "upright" position.

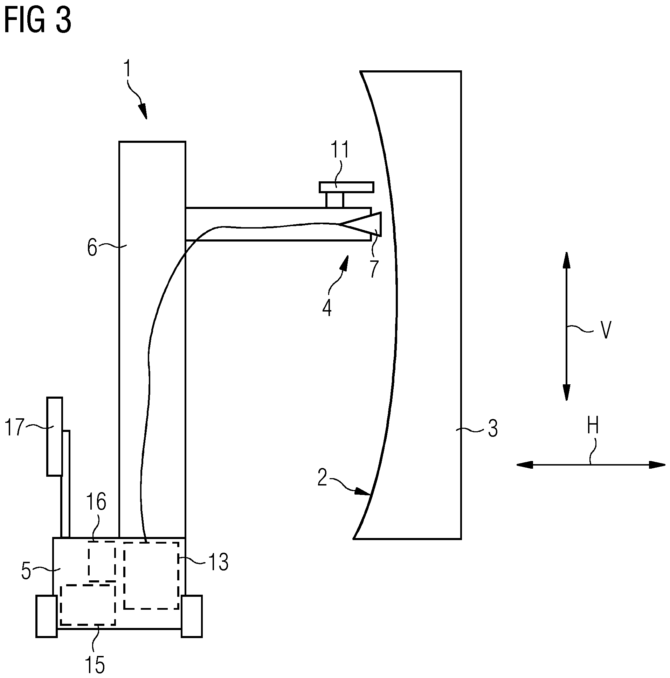

In fig. 3, an application device 1 according to the preferred third embodiment of the invention is shown in a schematic side view. The application device 1 according to the third embodiment differs from the first embodiment in the design of the application module 4. The application module 4 comprises a spray nozzle 7 and a distance sensing module 11 for sensing a distance of the spray nozzle 7 to the inner surface 2 of the mold 3. In this embodiment, the application module 4 does not comprise a wiping application tool 8. This preferred embodiment of the invention is preferred for application to a mold 3 in an "upright" position.

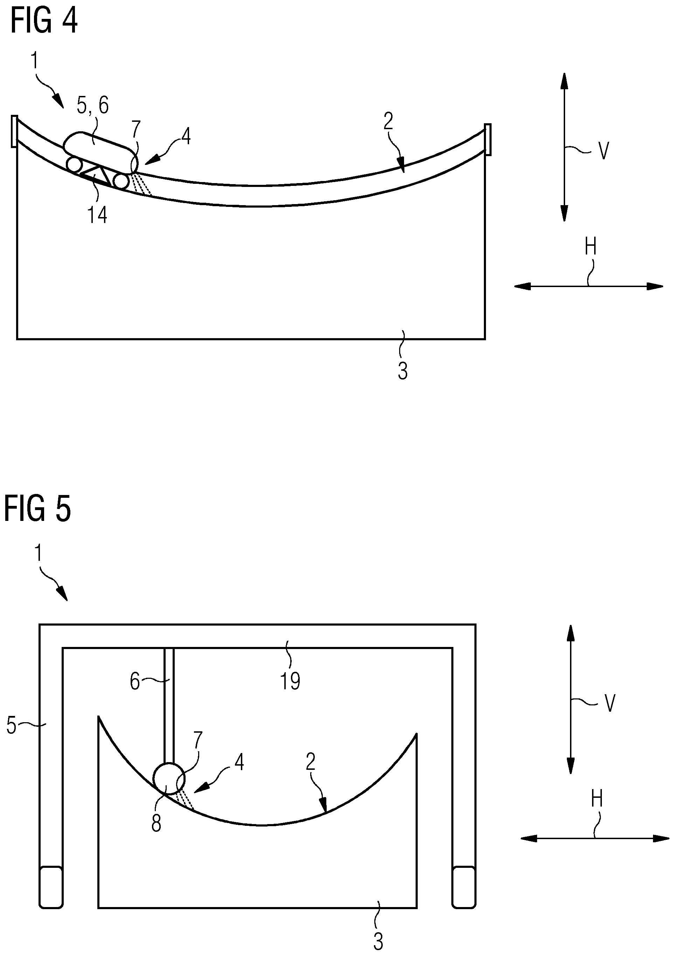

In fig. 4, an application device 1 according to the preferred fourth embodiment of the invention is shown in a schematic side view. The application device 1 is configured as a robot vehicle with the positioning module 6 integrated in the transport module 5. At a bottom side of the transport module 5, a suction module 14 is arranged for providing a suction force in cooperation with the inner surface 2 of the mold 3. Thus, the application device 1 can manage steep gradients of the inner surface 2 of the mold 3. If the application device 1 is not able to handle the steep gradients of the mold 3, a wire attached on either side of the mold 3 can be used for assistance. For spraying the release agent to the inner surface 2 of the mold 3, the application module 4 comprises a spray nozzle 7. An optional wiping application tool 8 (not shown) can be provided as well. The wiping application tool 8 can be configured as a mop, sponge or the like. This preferred embodiment of the invention is preferred for application to a mold 3 in "bathtub" position.

In fig. 5, an application device 1 according to the preferred fifth embodiment of the invention is shown in a schematic side view. According to the fifth embodiment, the transport module 5 has a portal design, wherein the positioning module 6 is arranged at a crossbeam 19 of the transport module 5. The application module 4 is configured like the application module 4 according to the preferred first embodiment of the invention, as shown in fig. 1, or similar. This preferred embodiment of the invention is preferred for application to a mold 3 in "bathtub" position.

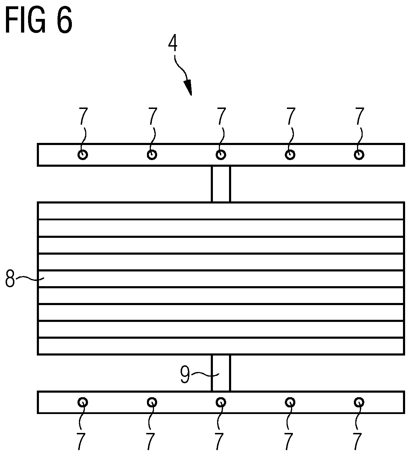

In fig. 6, a preferred embodiment of an application module 4 for an application device 1 according to the invention is shown in a schematic front view. The application module 4 comprises a wiping application tool 8, which is rotatably arranged about a rotational axis 9. The wiping application tool 8 can be configured as a mop, sponge or the like. On both sides of the wiping application tool 8, a series of spray nozzles 7 is arranged. The spray nozzles 7 on each side of the wiping application tool 8 are arranged in flush.

## Claims

1. Application device (1) for applying a release agent to an inner surface (2) of a mold (3) for casting a wind turbine rotor blade, comprising an application module (4) for applying the release agent to the inner surface (2) of the mold (3),
**characterized in**
**that** the application device (1) comprises a transport module (5) for moving the application device (1) along the mold (3) and a positioning module (6) arranged at the transport module (5) for holding the application module (4) and for positioning the application module (4) relatively to the mold (3).

2. Application device (1) according to claim 1,
**characterized in**
**that** the application module (4) comprises a spray nozzle (7).

3. Application device (1) according to claim 1 or 2,
**characterized in**
**that** the application module (4) comprises a wiping application tool (8).

4. Application device (1) according to claim 3,
**characterized in**
**that** the wiping application tool (8) comprises a mop and/or a sponge.

5. Application device (1) according to claim 3 or 4,
**characterized in**
**that** the wiping application tool (8) is configured as a rotating tool, which is configured for rotation about a rotational axis (9).

6. Application device (1) according to claim 5,
**characterized in**
**that** the positioning module (6) is configured for turning the rotational axis (9) of the wiping application tool (8) about a turning axis(10).

7. Application device (1) according to any of the previous claims,
**characterized in**
**that** the application device (1) comprises a distance sensing module (11) for determining a distance between the inner surface (2) of the mold (3) and the application device (1).

8. Application device (1) according to claim 7,
**characterized in**
**that** the distance sensing module (11) comprises an optical distance measurement device and/or a contact distance measurement device and/or an acoustic distance measurement device.

9. Application device (1) according to any of the previous claims,
**characterized in**
**that** the application device (1) comprises a pressure sensing module (12) for sensing a mutual pressure of the application module (4) and the inner surface (2) of the mold (3).

10. Application device (1) according to any of the previous claims,
**characterized in**
**that** the positioning module (6) is configured for moving the application module (4) in a vertical direction (V) and/or in a horizontal direction (H).

11. Application device (1) according to any of the previous claims,
**characterized in**
**that** the application device (1) comprises a fluid tank (13) for holding the release agent.

12. Application device (1) according to any of the previous claims,
**characterized in**
**that** the transport module (5) comprises a suction module (14) for enabling the application device (1) driving in a vertical direction (V) on the inner surface (2) of the mold (3).

13. Application device (1) according to any of the previous claims,
**characterized in**
**that** the application device (1) comprises a power pack (15) for providing electric energy for operating the application device (1).

14. Application device (1) according to any of the previous claims,
**characterized in**
**that** the application device (1) comprises a control module (16) for automatically operating the application device (1).

15. Application device (1) according to any of the previous claims,
**characterized in**
**that** the application device (1) comprises a user interface (17) for manually operating the application device (1).
